# EUROPEAN PATENT SPECIFICATION

(11) **EP 2 091 849 B1**
(45) Date of publication and mention of the grant of the patent: **10.03.2010**
(21) Application number: 07854835.1
(22) Date of filing: 29.11.2007
(51) Int. Cl.: B65G 17/24, B65G 21/22

(54) **OBLIQUE-ROLLER BELT CONVEYOR WITH SIDEGUARD**
SCHRÄGROLLENBANDFÖRDERER MIT SEITENSCHUTZ
TRANSPORTEUR À BANDE SUR ROULEAUX OBLIQUES AVEC PROTECTION LATÉRALE

(30) Priority: 29.11.2006 US 564407
(43) Date of publication of application: 26.08.2009
(73) Proprietor: Laitram, LLC, Harahan, LA 70123 (US)
(72) Inventor: PRESSLER, Eric M., New Orleans, Louisiana 70124 (US); COSTANZO, Mark, River Ridge, Louisiana 70123 (US); FOURNEY, Matthew L., Laurel, Maryland 20723 (US)
(74) Representative: Wombwell, Francis
(86) International application number: PCT/US2007/085947
(87) International publication number: WO 2008/067473

(56) References cited:
- EP-A- 1 277 676
- US-A1- 2005 072 656
- US-A1- 2006 249 354

## Description

### BACKGROUND

The invention relates generally to power-driven conveyors and, more particularly, to conveyors using a conveyor belt having article-supporting rollers rotating oblique to the direction of belt travel to translate conveyed articles to a side of the conveyor.

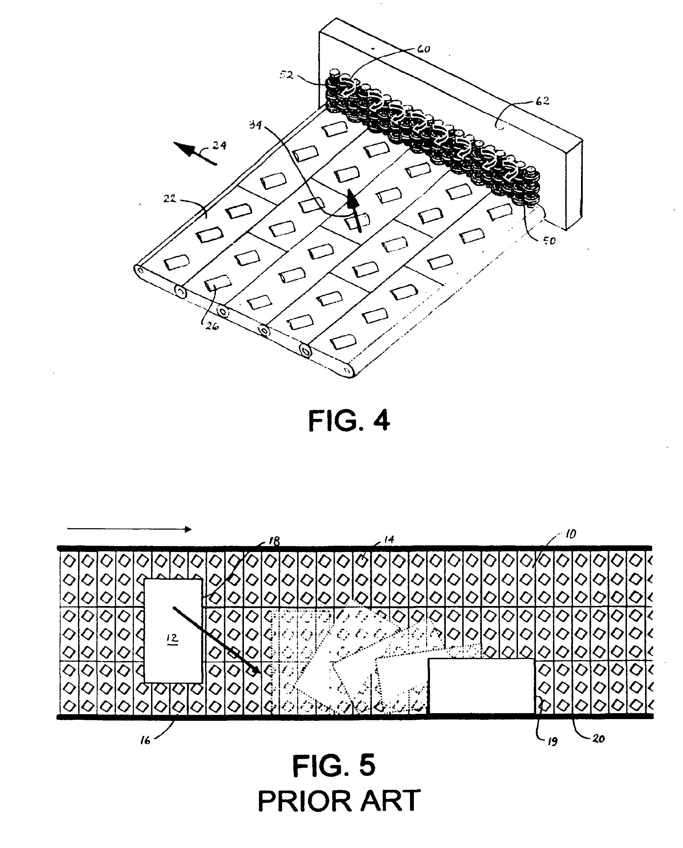

Conveyor belts with rollers extending through the thickness of the belt and arranged to rotate on axes oblique to the belt's direction of travel are used in conveyors to align articles along a side of the conveyor. The oblique rollers ride on bearing surfaces supporting the conveyor belt 10 from below to push articles 12 conveyed atop the rollers 14 toward a side 16 of the belt as it advances, as shown in FIG 5. When the longer side 18 of a rectangular article is leading, the article tends to rotate on contact with a stationary side rail 20 because of friction between the article and the side rail. The article orients itself in the most stable position-with the shorter side 19 leading. In many applications, it is important for all articles to be conveyed and aligned with the longer edge leading.

Thus, there is a need for a belt conveyor that can align conveyed articles without changing their orientations. A roller belt conveyor with a fixed sideguard is known, for example, from US 2005 072 656 A1.

### SUMMARY

This need and other needs are satisfied by a conveyor embodying features of the invention including a conveyor belt advancing in a direction of belt travel and having a plurality of rollers extending through its thickness. The rollers are arranged to rotate in a direction oblique to the direction of belt travel. A bearing surface underlying the conveyor belt in contact with the rollers causes the rollers to rotate as the conveyor belt advances. The obliquely oriented rotating rollers translate articles conveyed atop the rollers toward a side of the conveyor belt. A sideguard, disposed along the side of the conveyor belt and extending above the rollers, advances with the conveyor belt in the direction of belt travel to receive conveyed articles translated toward the side.

### BRIEF DESCRIPTION OF THE DRAWINGS

These features and aspects of the invention, as well as its advantages, are better understood by reference to the following description, appended claims, and accompanying drawings, in which:
FIG. 1 is an isometric view of a portion of a conveyor embodying features of the invention, including a sideguard comprising a series of plates;
FIG. 2 is an isometric view of a portion of another version of conveyor embodying features of the invention, including a sideguard having stacks of wheels;
FIG. 3 shows top plan, side elevation, and front elevation views of the conveyor of FIG. 2;
FIG. 4 is an isometric view of a portion of the conveyor of FIG. 2 further showing a vertical bearing surface for rotating the sideguard wheels as the conveyor belt advances; and
FIG. 5 is a top plan view of an oblique-roller belt operated in a conventional way in a conveyor with a stationary side rail.

### DETAILED DESCRIPTION

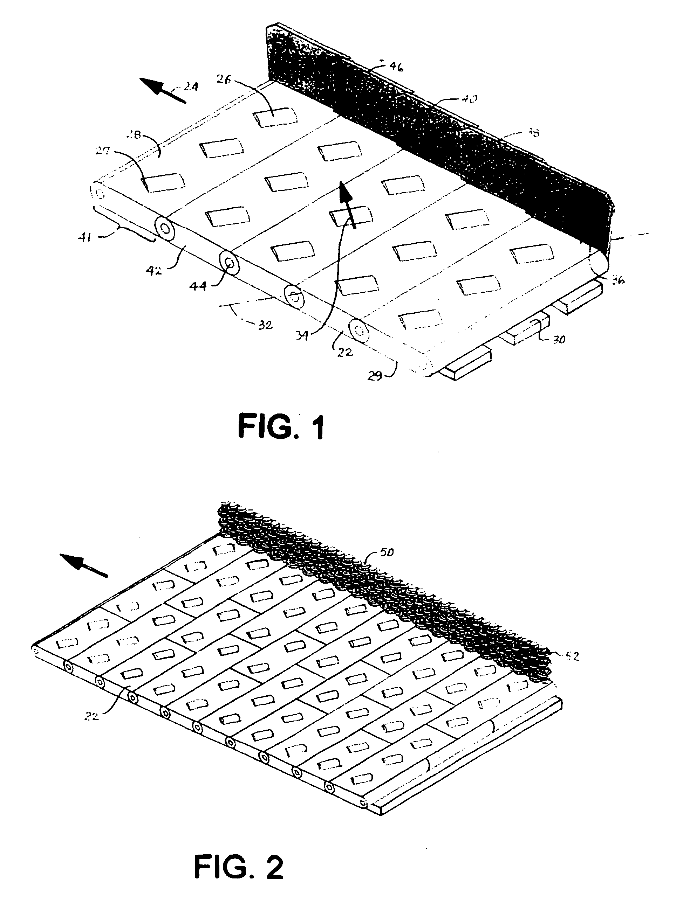

A portion of one version of a conveyor embodying features of the invention is shown in FIG. 1. The conveyor includes a conveyor belt 22 driven in a direction of belt travel 24. Rollers 26 retained in the belt, such as in cavities 27, extend past outer 28 and inner 29 belt surfaces. Salient portions of the rollers extending past the outer, or top, surface support articles conveyed on the belt. Salient portions of the rollers extending past the inner, or bottom, surface of the belt roll on roller bearing surfaces 30 below the belt. The rollers are arranged to rotate on axes 32 oblique to the direction of belt travel, defined, for example, by axles extending through bores in the rollers and retained in the body of the belt. As the belt advances in the direction of belt travel, the rollers rotate on their axes in an oblique direction 34, pushing articles conveyed atop the rollers toward a side 36 of the belt. A sideguard 38 at the side of the belt provides a vertical registration surface 40, against which articles translated to the side are aligned. In this example, the belt is a modular plastic conveyor belt constructed of a series of rows 40 of belt modules 42. The rows are joined to an adjacent leading and trailing rows at hinge joints 44 that allow the belt to articulate about drive and idle sprockets and to backbend. (A hinge joint is formed in the conventional manner by the interleaved hinge eyes of adjacent rows journaling a hinge pin.) The sideguard constitutes a series of individual plates 46. Each plate extends upward from the outer surface of a row at the side of the belt to which conveyed articles are directed by the rollers. The plates provide the sideguard with the registration surface 40. The plates may be mechanically attached to the belt modules or unitarily molded with them. Because the sideguard advances in the direction of belt travel with the belt, the sideguard engages articles translated to the side with les friction than a stationary conveyor side rail would. Consequently, a rectangular article being conveyed with its longer edge leading is less likely to rotate on contact with alignment structure at the side of the belt.

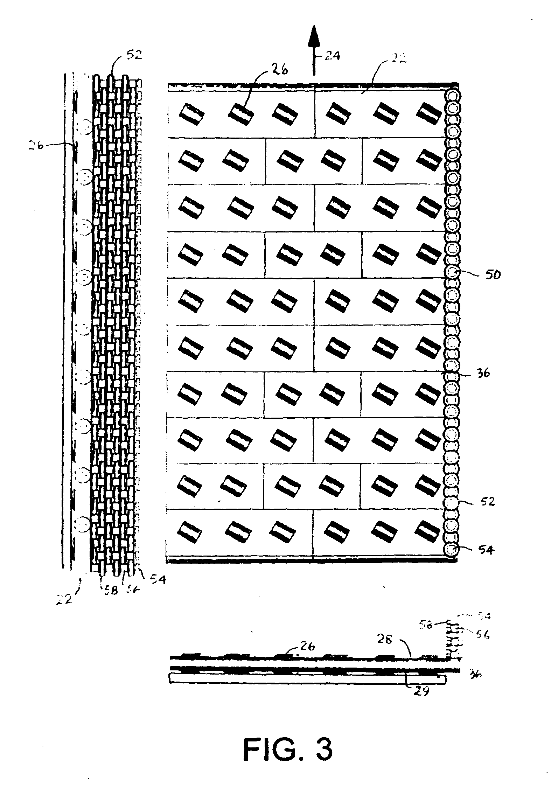

A sideguard 50 presenting an array of rotatable elements, such as wheels 52, is shown in the conveyor of FIGS. 2 and 3. The wheels are mounted on posts 54 spaced along the length of the conveyor belt 22 at the side 36 of the belt toward which the article-supporting rollers 26 direct the articles. The posts extend perpendicularly upward from the outer surface 28 of the belt. The wheels are stacked on the posts, which extend through central bores in the wheels. The posts serve as axles on which the portions of the wheels facing the belt rotate in the direction of belt travel. The wheels have hubs 56 on one side. The hubs are used to space the larger-diameter wheel treads 58 in each stack on the post. The wheels on consecutive posts are stacked oppositely. On even-numbered posts, the wheels are stacked with the hubs above the treads; on odd-numbered posts, the wheels are stacked with the hubs below the treads. This allows the wheels to be closely packed in an array with the treads on one post vertically offset from the treads of the wheels on an adjacent post and with the wheels on adjacent posts overlapping vertically. In this way, the wheel array forms a low-friction alignment surface for the articles. The wheels in FIGS. 2 and 3 are free to rotate on contact with the translated article. The low-friction rolling engagement allows the sideguard to receive translated articles without causing them to rotate.

As shown in FIG. 4, the wheels of the sideguard 50 in FIGS. 2 and 3 can be rotated as shown by arrow 60 by contact with a vertical wheel bearing surface 62. As the belt 22 advances in the direction of belt travel 24, the treads of the wheels 52 roll on the stationary vertical bearing surface. This causes the wheels to rotate in the direction of belt travel at their points of contact with conveyed articles. Because articles are being translated by the belt rollers 26 with a component of motion relative to the belt in the direction of belt travel and because the wheels are also rotating in the direction of belt travel where they contact the articles, any tendency of the articles to rotate is eliminated.

Although the invention has been described in detail with respect to a few preferred versions, other versions are possible. For example, the individual linear wearstrips providing the roller bearing surfaces in FIG. 1 may be replaced by a single bearing plate, as in FIGS. 2-4, or by support rollers engaging the belt rollers from below in rolling contact. As another example, the sideguards described are attached to the belt. But sideguards that move in the direction of belt travel at the side of the belt, but not physically attached to the belt may also be used. As yet another example, roller balls retained in a side wall could be used as rotatable elements in the sideguard instead of wheels on posts. And, the belt could be a flat belt as well as the modular belt used in describing the invention. So, as these few examples suggest, the scope of the claims is not meant to be limited to the preferred versions.

## Claims

1. A conveyor comprising:
a conveyor belt (22) advancing in a direction of belt travel (24) and having a plurality of rollers (26) extending through the thickness of the conveyor belt arranged to rotate in a direction oblique to the direction of belt travel;
a bearing surface (30) underlying the conveyor belt in contact with the rollers and causing the rollers to rotate as the conveyor belt advances to translate articles conveyed atop the rollers toward a side (36) of the conveyor belt;
**characterised in** further comprising:
a sideguard (38, 50) disposed along the side of the conveyor belt and extending above the rollers and advancing with the conveyor belt in the direction of belt travel to receive conveyed articles translated toward the side.

2. A conveyor as in claim 1 wherein the sideguard comprises a series of plates (46) upstanding from the conveyor belt along the side.

3. A conveyor as in claim 1 or 2 wherein the sideguard (38, 50) comprises a series of rotatable elements (52) rotatable in the direction of belt travel.

4. A conveyor as in claim 3 further comprising a second bearing surface (62) proximate the side of the conveyor belt (36) and wherein the rotatable elements rotate by contact with the second bearing surface (62) as the conveyor belt advances.

5. A conveyor as in claim 1 or 2 wherein the sideguard (38, 50) comprises a series of wheels (52) mounted to the conveyor belt for rotation on axes disposed perpendicular to the direction of belt travel.

6. A conveyor as in claim 1 wherein the sideguard (38, 50) comprises a series of posts upstanding from the conveyor belt and one or more wheels received on each post for rotation about the post.

## Patentansprüche

1. Fördereinrichtung mit:
einem Förderband (22), das sich in einer Richtung des Bandlaufs (24) vorschiebt und eine Vielzahl von Walzen (26) aufweist, die sich durch die Dicke des Förderbandes erstrecken und so angeordnet sind, dass sie sich in einer zur Richtung des Bandlaufs schrägen Richtung drehen;
einer Auflagefläche (30), die unter dem Förderband in Kontakt mit den Walzen liegt und bewirkt, dass sich die Walzen drehen, wenn sich das Förderband vorschiebt, um auf den Rollen beförderte Gegenstände zu einer Seite (36) des Förderbandes zu überführen;
**dadurch gekennzeichnet, dass** sie ferner umfasst:
einen Seitenschutz (38, 50), der entlang der Seite des Förderbandes angeordnet ist und sich über den Walzen erstreckt und sich mit dem Förderband in der Richtung des Bandlaufs vorschiebt, um beförderte Gegenstände, die zur Seite überführt werden, aufzunehmen.

2. Fördereinrichtung nach Anspruch 1, wobei der Seitenschutz eine Reihe von Platten (46) umfasst, die sich entlang der Seite vom Förderband erheben.

3. Fördereinrichtung nach Anspruch 1 oder 2, wobei der Seitenschutz (38, 50) eine Reihe von drehbaren Elementen (52) umfasst, die in der Richtung des Bandlaufs drehbar sind.

4. Fördereinrichtung nach Anspruch 3, welche ferner eine zweite Auflagefläche (62) nahe der Seite des Förderbandes (36) umfasst und wobei sich die drehbaren Elemente durch den Kontakt mit der zweiten Auflagefläche (62) drehen, wenn sich das Förderband vorschiebt.

5. Fördereinrichtung nach Anspruch 1 oder 2, wobei der Seitenschutz (38, 50) eine Reihe von Rädern (52) umfasst, die für eine Drehung auf Achsen, die senkrecht zur Richtung des Bandlaufs angeordnet sind, am Förderband montiert sind.

6. Fördereinrichtung nach Anspruch 1, wobei der Seitenschutz (38, 50) eine Reihe von Pfosten, die sich vom Förderband erheben, und ein oder mehrere Räder, die an jedem Pfosten zur Drehung um den Pfosten aufgenommen sind, umfasst.

## Revendications

1. Transporteur comprenant :
une bande transporteuse (22) avançant dans une direction de déplacement (24) de la bande et ayant une pluralité de rouleaux (26) s'étendant dans l'épaisseur de la bande transporteuse, ménagés pour tourner dans une direction oblique à la direction de déplacement de la bande ;
une surface d'appui (30) située sous la bande transporteuse, en contact avec les rouleaux et provoquant la rotation des rouleaux lorsque la bande transporteur avance, de manière à déplacer en translation des articles transportés sur les rouleaux vers un côté (36) de la bande transporteuse ;
***caractérisé en ce qu*'**il comprend de plus :
une protection latérale (38, 50) placée le long du côté de la bande transporteur et s'étendant au-dessus des rouleaux, et avançant avec la bande transporteuse dans la direction de déplacement de la bande pour recevoir les articles transportés déplacés en translation vers le côté.

2. Transporteur selon la revendication 1, dans lequel la protection latérale comprend une série de plaques (46) se dressant à partir de la bande transporteuse le long du côté.

3. Transporteur selon la revendication 1 ou 2, dans lequel la protection latérale (38, 50) comprend une série d'éléments rotatifs (52) pouvant être entraînés en rotation dans la direction de déplacement de la bande.

4. Transporteur selon la revendication 3, comprenant de plus une deuxième surface d'appui (62) à proximité du côté de la bande transporteuse (36), et dans lequel les éléments rotatifs tournent par contact avec la deuxième surface d'appui (62) lorsque la bande transporteuse avance.

5. Transporteur selon la revendication 1 ou 2, dans lequel la protection latérale (38, 50) comprend une série de roues (52) montées sur la bande transporteuse pour une rotation sur des axes disposés perpendiculairement à la direction de déplacement de la bande.

6. Transporteur selon la revendication 1, dans lequel la protection latérale (38, 50) comprend une série de montants se dressant à partir de la bande transporteuse, et une ou plusieurs roues reçues sur chaque montant pour une rotation autour du montant.
